(19) Europäisches Patentamt
European Patent Office
Office européen des brevets

(11) **EP 0 710 551 B1**

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(51) Int. Cl.[6]: **B41C 1/05**, B41C 1/14, B23K 26/08

(21) Anmeldenummer: **94113224.3**

(22) Anmeldetag: **24.08.1994**

(54) **Vorrichtung zur Herstellung einer Druckschablone**

Apparatus for the production of a stencil printing master

Dispositif pour la production d'une matrice d'impression par stencil

(84) Benannte Vertragsstaaten:
**AT CH DE ES FR GB IT LI NL**
Benannte Erstreckungsstaaten:
**SI**

(43) Veröffentlichungstag der Anmeldung:
**08.05.1996 Patentblatt 1996/19**

(73) Patentinhaber: **Schablonentechnik Kufstein Aktiengesellschaft**
**A-6330 Kufstein (AT)**

(72) Erfinder: **Rückl, Siegfried**
**A-6322 Langenkampfen (AT)**

(74) Vertreter: **TER MEER - MÜLLER - STEINMEISTER & PARTNER**
**Mauerkircherstrasse 45**
**81679 München (DE)**

(56) Entgegenhaltungen:
**EP-A- 0 209 449      EP-A- 0 347 010**
**EP-A- 0 550 022      EP-A- 0 562 149**
**DE-A- 4 123 052      US-A- 5 331 338**

• **LASER + ELEKTRO-OPTIK, Bd.9, Nr.4, November 1977 Seite 8 DR. K.H. VON GROTE, R. REMUND 'Materialabtrag an Rotoren'**

## Beschreibung

Die Erfindung betrifft eine Vorrichtung zur Herstellung einer Druckschablone gemäß dem Patentanspruch 1.

Eine derartige Vorrichtung ist bereits allgemein bekannt (siehe z.B. EP-A-0 347 010) und enthält einen drehbar gelagerten Druckzylinder, einen Laser zur Erzeugung eines auf dem Druckzylinder auftreffenden Laserstrahls, der in Längsrichtung des Druckzylinders verschiebbar ist, und eine Fokussierungsoptik, um den Laserstrahl auf die Oberfläche des Druckzylinders zu fokussieren.

Bei der Gravur von Druckschablonen mit Hilfe eines Laserstrahls ist es notwendig, die Lage der Strahltaille kleinen Abweichungen der Druckschablone bzw. des Werkstücks schnell folgen zu lassen, um die Stelle der höchsten Strahlenergie stets auf der Oberfläche des Werkstücks zu konzentrieren, und zwar auch dann, wenn diese Oberfläche Lageabweichungen gegenüber einem erwarteten Verlauf zeigt.

Es ist bereits vorgeschlagen worden (siehe EP-A-0 347 010), bei einer derartigen Abweichung ein aus einer oder mehreren Linsen bestehendes Linsensystem durch geeignete Bewegung entsprechend nachzustellen. Die Zeit, innerhalb der eine solche Ausgleichsbewegung stattfinden kann, ist aber bei größeren und schnell auftretenden Oberflächenabweichungen meist zu groß. So ist für die Kompensation einer Oberflächenlageabweichung von einem Millimeter das Linsensystem ebenfalls um einen Millimeter nachzustellen, was relativ viel Zeit beansprucht.

Der Erfindung liegt die Aufgabe zugrunde, die Vorrichtung der eingangs genannten Art so weiterzubilden, daß sich die Strahltaille des Laserstrahls in Richtung seiner Strahlachse sehr viel schneller verschieben läßt.

Die Lösung der gestellten Aufgabe ist im Patentanspruch 1 angegeben. Vorteilhafte Ausgestaltungen der Erfindung sind den Unteransprüchen zu entnehmen.

Eine erfindungsgemäße Vorrichtung zeichnet sich dadurch aus, daß

- die Fokussierungsoptik wenigstens einen Ablenkspiegel mit elastisch deformierbarer Spiegelmembran aufweist.
- Stellmittel vorhanden sind, die in Abhängigkeit eines Stellsignals einen Krümmungsverlauf der Spiegelmembran einstellen.
- wenigstens ein Sensor zur Messung eines Abstands zwischen ihm und der Oberfläche der Druckschablone vorgesehen ist, und
- ein Stellsignalgenerator vorhanden ist, der in Abhängigkeit des gemessenen Abstands das Stellsignal erzeugt.

Mit Hilfe der erfindungsgemäßen Vorrichtung läßt sich die Verstellbewegung im Verhältnis zur auszuregelnden Oberflächenabweichung erheblich verringern, so daß eine Nachstellung der Fokuslage des Laserstrahls oder eine Veränderung des Brennfleckdurchmessers im Bereich des Laserstrahlauftreffpunkts in sehr kurzer Zeit möglich sind.

Vorzugsweise kann die Verstellung der Spiegelmembran durch piezoelektrische oder magnetostriktive Stellmittel erfolgen, die praktisch trägheitslos arbeiten und sehr hohe Verstellgeschwindigkeiten ermöglichen.

Die Spiegelmembran kann, wie oben bereits erwähnt, kreisförmig ausgebildet sein, kann aber auch oval oder elliptisch sein. In den beiden zuletzt genannten Fällen lassen sich daher insbesondere bei großem Einfallswinkel größere Abbildungsfehler vermeiden, wie später noch diskutiert wird.

Vorzugsweise beaufschlagen die Stellmittel nur einen zentralen hinteren Teil der Spiegelmembran, was zu einem einfachen Aufbau des Ablenkspiegels führt. Die Stellmittel können die Spiegelmembran rückseitig aber auch über eine Ringschneide beaufschlagen. An diese Ringschneide können auch mehrere Stellmittel angreifen, z. B. drei, die über den Ringumfang gleichmäßig voneinander beabstandet sind.

Nach einer Ausgestaltung der Erfindung ist die Spiegelmembran durch geeignete Formgebung ihrer Rückseite im Zentrum dicker als an ihrem Rand.

Durch die Einwirkung der Stellmittel wird sich die spiegelnde Oberfläche der Spiegelmembran in einer bestimmten Weise deformieren. Ziel ist, daß sich die an der Spiegelmembran reflektierten Strahlen immer in einem Punkt schneiden. Damit sich die Spiegelmembran jedoch in dieser Weise verformen läßt, muß für deren Rückseite ein streng definierter Kurvenverlauf eingehalten werden, der zu dem eingangs genannten Dickenverlauf der Spiegelmembran, gesehen in radialer Richtung, führt. Dabei kann die Membrandicke vom äußeren Membrananlenkbereich radial nach innen gesehen ständig ansteigen. Ferner kann zwischen Zentrum und Rand wenigstens ein Wendepunkt der Krümmung an der Rückseite vorhanden sein. Auch kann rückseitig im Zentrum ein Plateau vorhanden sein, an dessen Rand die Ringschneide liegt.

Der Rand der Spiegelmembran kann z. B. einstückig mit einem Stellmittelgehäuse verbunden oder zwischen Stellmittel-Gehäuseteilen eingeklemmt sein. Dabei befindet sich entlang des rückseitigen äußeren Umfangsrands der Spiegelmembran eine tiefere Ausnehmung zur Bildung des Membrananlenkbereichs.

Nach einer anderen vorteilhaften Ausgestaltung der Erfindung ist zur Ermittlung der Position der Spiegelmembran die Position eines Stellkopfs der Stellmittel detektierbar. Diese Position des Stellkopfs, der auf den Zentralbereich der Spiegelmembran einwirkt, kann als Ist-Position einem Regelkreis zugeführt werden, der z. B. eine einer Soll-Position entsprechende Signalspannung an die Stellmittel abgibt. Dadurch läßt sich eine noch genauere Verstellung der Spiegelmembran vornehmen.

Insbesondere läßt sich die Position des Stellkopfs durch Interferenz eines an ihm reflektierten Lichtstrahls mit einem anderen Lichtstrahl detektieren, so daß durch Auswertung der dabei entstehenden Interferenzringe ein sehr hohes Auflösungsvermögen erzielt wird.

Nach einer Weiterbildung der Erfindung können sich im Laserstrahlengang mehrere Ablenkspiegel mit verstellbarer Spiegelmembran befinden. Dadurch wird es möglich, auch größere Lageabweichungen zu kompensieren, ohne daß die Verstellwege der Einzelspiegel zu groß werden und u. U. die zulässigen Dauerwechsel- bzw. Dauerschwellfestigkeitsbereiche der Spiegelmembran überschritten werden. Auch läßt sich durch den Betrieb mehrerer derartiger Ablenkspiegel die zur Kompensation der Lageabweichungen erforderliche Stellzeit weiter verringern.

Nach einer anderen sehr vorteilhaften Weiterbildung der Erfindung sind diese mehreren Ablenkspiegel in unterschiedlichen Ebenen angeordnet. Dadurch lassen sich insbesondere Fehler in der Abweichung der Brennweiten der Saggital- und der Meridionalebene weiter verringern.

Enthält die Fokussierungsoptik zusätzlich ein fokussierendes Linsensystem, so folgt für die Gesamtbrennweite des kombinierten Linsen-Spiegel-Systems die Beziehung:

$$\frac{1}{f_{gesamt}} = \frac{1}{f_{Linse}} + \frac{1}{f_{Spiegel}} \qquad (1)$$

Hierin ist die Brennweite $f_{Spiegel}$ positiv für einen konkaven Krümmungsradius des Ablenkspiegels einzusetzen und negativ für einen konvexen Krümmungsradius. Als Linsensystem wird hier stets ein Sammellinsensystem gewählt oder zumindest ein solches, das sich in der Summe als Sammellinsensystem verhält. Entsprechend ist die Brennweite $f_{Linse}$ stets positiv. Die Taille des Laserstrahls von kleiner Strahldivergenz wird bei dem Durchgang desselben durch das Linsensystem im wesentlichen in der Umgebung des Brennpunkts des Linsenssystems erzeugt. Ablenkspiegel und Linsensystem sind dabei vorzugsweise in solchen Abständen voneinander angeordnet, daß die obige Beziehung (1) erfüllt ist.

Wählt man z. B. als Linsensystem eine Einzellinse und nimmt ferner an, daß die Brennweite dieser Einzellinse 50 mm beträgt und die Gesamtbrennweite des aus der Einzellinse und dem Ablenkspiegel bestehenden Systems zwischen 50 und 49 mm einstellbar sein soll, so muß der Ablenkspiegel im Fall der Gesamtbrennweite von 50 mm gerade plan sein und im Fall der Gesamtbrennweite von 49 mm eine Brennweite von 2450 mm aufweisen. Diese Brennweite erfordert einen doppelt so großen Spiegelradius, also hier etwa 4900 mm. Biegt man nun eine kreisscheibenförmige Membran, die am Rand drehbar gelagert ist, durch eine an ihrer Rückseite angreifende Kraft, dann entsteht in jedem Meridianquerschnitt eine Biegekurve, die in sehr guter Näherung einem kreisförmig durchgebogenen Hohlspiegel entspricht. Durch eine entsprechende Gestaltung des Membrandickenverlaufs vom Zentrum zum Rand hin kann man die Form der Biegelinie jedem gewünschten Kurvenverlauf anpassen.

Für die Beziehung zwischen der Durchbiegung einer kugelförmig durchgebogenen Kreismembran und dem Kugelradius erhält man nachfolgenden Ausdruck:

$$b = R - \sqrt{R^2 - (d^2/4)} \qquad (2)$$

Hierin bedeuten b die Durchbiegung, R der Kugelradius und d der Durchmesser der Kreismembran.

Die für die genannten Bearbeitungszwecke üblicherweise verwendeten Laserstrahlen haben nach dem Austritt aus dem Laserresonator einen Durchmesser von etwa 15 mm. Verwendet man eine spiegelnde Kreismembran von 25 mm Durchmesser und wünscht man diese so durchzubiegen, daß sich ein Krümmungsradius von 4900 mm einstellt, so erfordert dies nach der eben genannten Beziehung eine Durchbiegung von ca. 16 μm. Das angegebene Verhältnis des Membrandurchmessers zum Strahldurchmesser (25/15) ergibt sich aus der bekannten Forderung der Lasertechnik, daß die Strahlbegrenzungen etwa das 1,7fache des $1/e^2$-Strahlrandes betragen sollen, um Beugungserscheinungen zu vermeiden, die das Arbeitsergebnis ungünstig beeinflussen könnten.

Das Verhältnis der Verlagerung der Strahltaille zu der Stellbewegung an der Spiegelmembran entspricht dann 1000/16 = 62,5. Es ist also die als Spiegel verwendete Membran nur um den 62,5ten Teil der Verlagerungsbewegung der Strahltaille durchzubiegen. Bedenkt man, daß diese Membran nur so dick ausgeführt werden muß, daß gerade die Wärmeableitung gewährleistet ist (an einem mit dielektrischer Mehrfachbeschichtung ausgerüsteten Spiegel fallen bei einem 1 kW-Laserstrahl etwa 5 W Verlustleistung an), so erkennt man, daß auch die zu bewegenden Massen sehr viel geringer sind als wenn man Linsen und zugehörige Fassungen bewegen müßte. Dementsprechend liegen die mechanischen Eigenfrequenzen der erfindungsgemäßen Vorrichtung sehr hoch und daher kann eine Nachführung der Laserstrahltaille senkrecht zur Oberfläche der Druckschablone bzw. des Werkstücks extrem schnell ausgeführt werden.

Die Fokussierungsoptik bzw. das Linsensystem und der wenigstens eine Ablenkspiegel sind vorteilhaft auf einem gemeinsamen Schlitten angeordnet, der sich relativ zur Druckschablone bzw. Siebdruckschablone oder zum Werkstück bewegen läßt. Liegt z. B. eine hohlzylindrisch ausgebildete Siebdruckschablone vor, die auf ihrer Oberfläche eine lichtempfindliche Lackschicht trägt und schnell um ihre Längsachse gedreht wird, so kann der Schlitten bei Drehung der Siebdruckschablone um ihre Längsachse parallel zu dieser Längsachse verschoben werden, um die Siebdruckschablone bzw. die auf ihr vorhandene Lackschicht entlang einer wendelförmigen Bahn bereichs- bzw. punktweise belichten zu können. Treten dabei Abweichungen der Siebdruckschablone von ihrer idealen Kreisform auf. was durch einen an ihrem Umfang angeordneten Sensor festgestellt werden kann, so läßt sich unter Verwendung der Ausgangssignale dieses Sensors die tatsächliche Lage der Wand der Siebdruckschablone gegenüber ihrer idealen Lage im Bereich des Laserstrahl-Auftreffpunktes berechnen, woraus sich ein Stellsignal erzeugen läßt, um die Strahltaille des Laserstrahls in Strahlrichtung so nachzustellen, daß diese wieder im Bereich der Oberfläche der Siebdruckschablone zu liegen kommt. Entsprechendes ist in der europäischen Patentanmeldung EP-A-0 679 510 beschrieben, die insofern auch zum Gegenstand der vorliegenden Anmeldung gemacht wird.

Die Erfindung wird nachfolgend unter Bezugnahme auf die Zeichnung im einzelnen beschrieben. Es zeigen:

**Figur 1** eine Draufsicht auf eine Fokussierungseinrichtung nach einem ersten Ausführungsbeispiel der Erfindung;

**Figur 2** eine Draufsicht auf eine Fokussierungseinrichtung nach einem zweiten Ausführungsbeispiel der Erfindung;

**Figur 3** eine Seitenansicht der Fokussierungseinrichtung nach Figur 2;

**Figur 4** eine Darstellung zur Erläuterung der Verhältnisse bei einem elliptischen bzw. ovalen Ablenkspiegel;

**Figur 5** eine Draufsicht auf eine Fokussierungseinrichtung nach einem dritten Ausführungsbeispiel der Erfindung;

**Figur 6** eine schematische Ansicht einer Fokussierungseinrichtung nach einem vierten Ausführungsbeispiel der Erfindung;

**Figur 7** einen Achsschnitt durch einen rotationssymmetrisch aufgebauten Ablenkspiegel mit Piezoelement;

**Figur 8** einen Grundriß des Ablenkspiegels nach Figur 7;

**Figur 9** einen Achsschnitt durch einen rotationssymmetrisch aufgebauten Ablenkspiegel mit magnetostriktivem Element;

**Figur 10** einen Grundriß des Ablenkspiegels nach Figur 9;

**Figur 11** einen Schnitt durch einen Ablenkspiegel mit einer elliptischen Spiegelmembran entlang der langen Ellipsenachse;

**Figur 12** einen Schnitt durch den Ablenkspiegel nach Figur 11 entlang der kurzen Ellipsensachse;

**Figur 13** eine Draufsicht auf den Ablenkspiegel nach den Figuren 11 und 12;

**Figur 14** einen Achsschnitt durch einen piezoelektrisch betätigten Ablenkspiegel mit optischer Lagedetektoreinrichtung;

**Figur 15** einen Achsschnitt durch einen magnetostriktiv betätigten Ablenkspiegel mit optischer Lagedetektoreinrichtung;

**Figur 16** eine schematische Darstellung des Gesamtaufbaus einer Lasergravureinrichtung mit erfindungsgemäßer Laserstrahl-Fokussierungseinrichtung;

**Figur 17** eine Schnitt durch einen Ablenkspiegel mit Ringschneide; und

**Figur 18** eine perspektivische Darstellung einer weiteren Fokussierungseinrichtung nach der Erfindung.

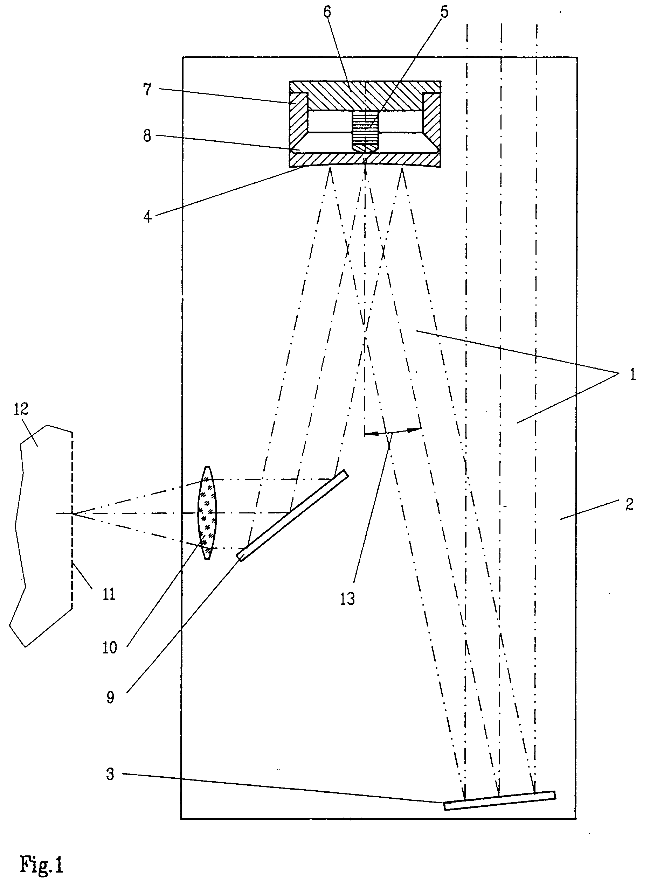

Ein erstes Ausführungsbeispiel einer erfindungsgemäßen Laserstrahl-Fokussierungseinrichtung ist in Figur 1 dargestellt. Ein Laserstrahl 1 von etwa 15 mm Durchmesser trifft von oben kommend auf einen auf einem Schlitten 2 befestigten ersten Umlenkspiegel 3 und wird von diesem auf eine Spiegel- bzw. Hohlspiegelmembran 4 gelenkt. Der eben genannte Strahldurchmesser bezieht sich auf jenen Strahldurchmesser, bei welchem die Intensität auf den $1/e^2$-Teil, also auf 13,53% der Mittenintensität des Strahls abgefallen ist. Der Krümmungsradius der Spiegeloberfläche der Spiegelmembran 4 ist durch ein Piezoelement 5 veränderbar. Zu diesem Zweck wird das Piezoelement 5 mit einem elektrischen Stellsignal angesteuert. Bei sogenannten Piezo-Multilayerelementen genügt hierzu ein Spannungssignal in der Größenordnung von 100 V. Das Piezoelement 5 stützt sich mit einem Ende an einem Gehäuseboden 6 ab, der über einen Ringteil 7 mit der Hohlspiegelmembran 4 verbunden ist. Die Verbindung zwischen dem Ringteil 7 und der Hohlspiegelmembran 4 ist hier einstückig ausgeführt. An der Übergangsstelle zwischen dem Ringteil 7 und der Hohlspiegelmembran 4 ist durch eine Eindrehung 8 ein sehr dünner und in Umfangsrichtung verlaufender Wandabschnitt erzeugt, der als Membrananlenkbereich bezeichnet werden kann, so daß sich die Hohlspiegelmembran 4 nahezu so verhält wie eine am Rand frei drehbar gelagerte Platte. Nach der Reflexion des Laserstrahls 1 durch die Hohlspiegelmembran 4 wird dieser wegen der sehr großen Brennweite von 2450 mm zunächst nur schwach fokussiert und läuft so nach einer weiteren Reflexion an einem Umlenkspiegel 9 durch eine Fokussierungslinse 10. Diese fokussiert den Laserstrahl 1 dann endgültig auf der Oberfläche 11 eines Werkstücks 12, wobei im vorliegenden Fall das Werkstück 12 eine lackabgedeckte Schablone ist, z. B. eine hohlzylindrische Siebdruckschablone mit einer Zylinderlängsachse, parallel zu der der Schlitten 2 verschoben wird. Dabei trifft der fokussierte Laserstrahl 1 in Radialrichtung auf die Siebdruckschablone auf. Bei dem hier gezeigten Strahlenverlauf ist wegen des kleinen Einfallswinkels 13 keine weitere Maßnahme zur Korrektur von Abbildungsfehlern (Astigmatismus oder Koma) notwendig.

Die Herstellung der Hohlspiegelmembran 4 kann beispielsweise so erfolgen, daß man anstelle des Piezoelements 5 eine Stellschraube in den Gehäuseboden 6 einsetzt, mit dieser Stellschraube die vorgefertigte Hohlspiegelmembran 4 um beispielsweise 16 μm nach außen durchbiegt und in diesem Zustand die Hohlspiegelmembran 4 plan schleift und plan poliert. Wird nach Beendigung dieser Fertigungsoperationen die Stellschraube entfernt, so federt die Hohlspiegelmembran 4

um 16 μm zurück und es liegt jetzt ein im spannungsfreien Zustand befindlicher Konkavspiegel vor.

Dieser kann durch das sich verlängernde Piezoelement 5 deformiert werden, bis bei einer Verlängerung des Piezoelements 5 um beispielsweise 16 μm gerade wieder die bei der Bearbeitung erzeugte Planlage erreicht wird. Wählt man z. B. für die Membran bei 25 mm Durchmesser eine Stärke von 1 mm und als Material eine AlCuMg-Legierung, so erhält man für 16 μm Mittendurchbiegung eine notwendige Kraft von 14 N und eine mechanische Biegespannung in der Mitte der Membran von 225 N/mm$^2$. Man erkennt hieraus, daß die erforderlichen Biegevorgänge im rein elastischen Bereich stattfinden und deshalb rückstellbar sind. Als Membranwerkstoff wird man natürlich wie schon im eben berechneten Beispiel ein Material wählen, welches einen ausgedehnten elastischen Bereich aufweist, z. B. Cu-legiertes Aluminium (hart) oder gehärteten Federstahl. Diese Materialien lassen sich mit einer aus dielektrischen Werkstoffen bestehenden Mehrfachspiegelschicht versehen, um Reflexionsgrade von 0,998 und mehr zu erreichen.

Durch ein wählbares elektrisches Stellsignal, das an das Piezoelement 5 angelegt wird, läßt sich die Verlängerung desselben in geeigneter Weise einstellen und dementsprechend die Brennweite der Hohlspiegelmembran 4.

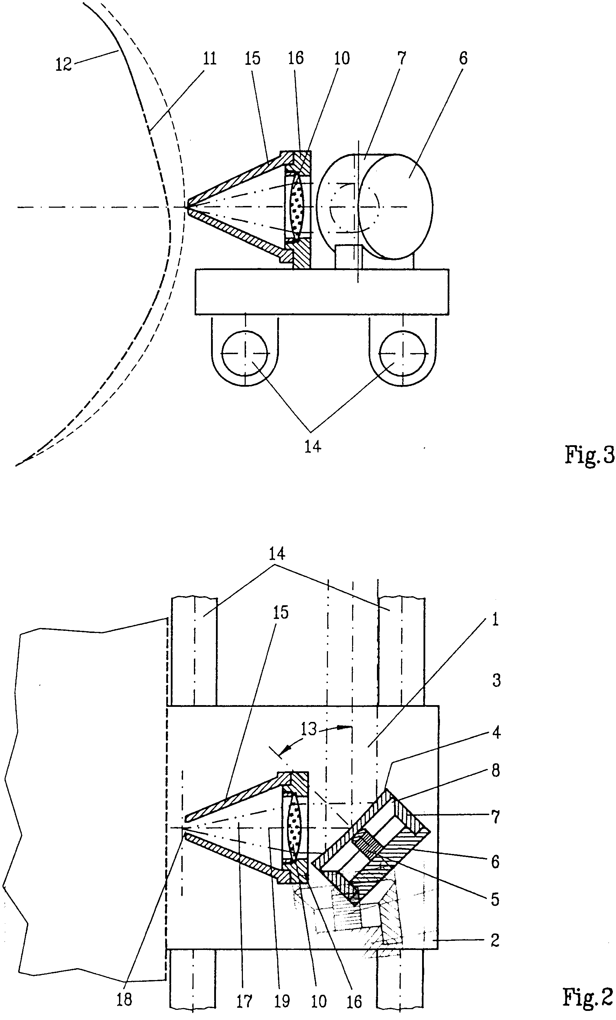

In den Figuren 2 und 3 sind gleiche Elemente wie in Figur 1 mit den gleichen Bezugszeichen versehen. Hier ist ein etwas einfacherer Strahlengang des Laserstrahls 1 eingezeichnet, der aber höhere Ansprüche an die optische Korrektur der Fokussierungseinrichtung stellt. Der Schlitten 2 mit den darauf angeordneten optischen Elementen zur Fokussierung des Laserstrahls 1 läuft auf zwei im Abstand und parallel zueinander liegenden Führungen 14, die auch parallel zur Zylinderachse des Siebdruckzylinders liegen, der hier mit dem Bezugszeichen 12 versehen ist. Seine Oberfläche 11 weicht im Bereich des Gravurkopfs von ihrer idealen Lage ab, wie die Figur 3 erkennen läßt, wobei diese ideale Lage durch die dünn eingezeichnete gestrichelte Linie markiert ist. Um die Strahltaille des Laserstrahls 1 in Richtung der Zylinderoberfläche 11 verschieben zu können, wird das Piezoelement 5 durch ein geeignetes radiales Stellsignal angesteuert, dessen Erzeugung prinzipiell in der bereits genannten europäischen Patentanmeldung EP-A-0 679 510 beschrieben worden ist.

Zwischen der Linse 10 und der zu bearbeitenden Oberfläche 11 ist noch eine Schutzdüse 15 vorhanden. Diese wird auf eine Linsenfassung 16 aufgeschraubt, die die Fokussierungslinse 10 hält. Durch einen nicht mehr dargestellten Gasanschluß an der Schutzdüse 15 gelangt Schutzgas oder Luft in den Düseninnenraum 17 und strömt von dort über eine Düsenöffnung 18 aus. Durch die gleiche Düsenöffnung 18 tritt auch der bereits stark fokussierte Laserstrahl 1 aus der Schutzdüse 15 aus. Der Gasstrom dient im wesentlichen dazu, den Zutritt von Partikeln zur Fokussierungslinse 10 und deren Beschädigung durch die Partikel zu verhindern.

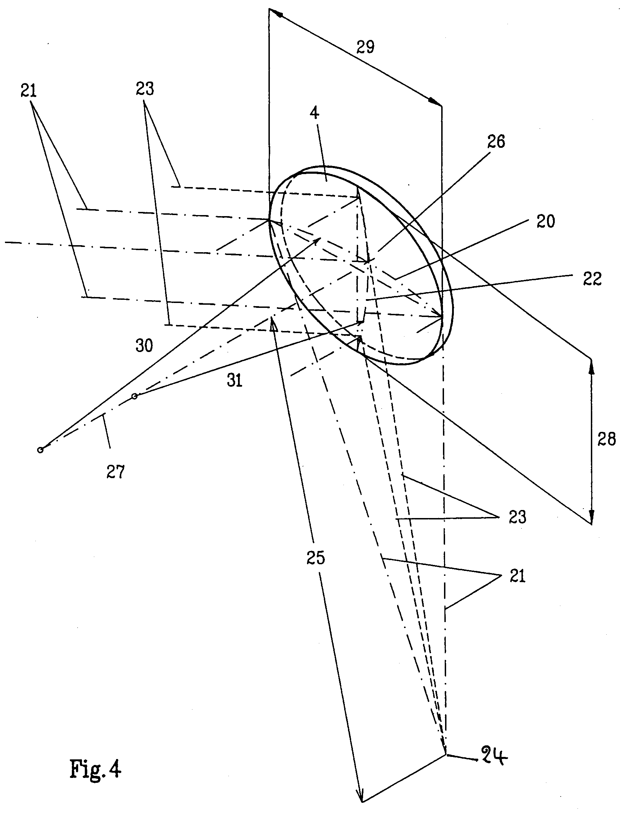

Die Strahlführung des Laserstrahls 1 ist hier unter Inkaufnahme eines sehr großen Einfallswinkels bezüglich des Hohlspiegelelements 4 sehr einfach gestaltet. Wegen dieses großen Einfallswinkels 13 besteht allerdings die Gefahr größerer Abbildungsfehler. Diese werden anhand der isometrischen Zeichnung der nachfolgenden Figur 4 näher beschrieben. Bezüglich der dort verwendeten Bezeichnungen sei erwähnt, daß die in der Figur 2 gezeigte Schnittebene durch die Schutzdüse 15 die Meridionalebene und die Ebene senkrecht zu dieser durch die optische Achse 19 die Saggitalebene ist.

In der Figur 4 ist die Hohlspiegelmembran wiederum mit dem Bezugszeichen 4 bezeichnet. Die Meridionalebene ist durch eingezeichnete Randstrahlen 21 begrenzt und die Saggitalebene durch Randstrahlen 23. Die Hohlspiegelmembran 4 wird wegen des großen Einfallswinkels 13 entlang der Schnittkurve 20 mit der Meridionalebene auf einem längeren Abschnitt vom Laserstrahl 1 beaufschlagt als entlang ihrer Schnittkurve 22 mit der Saggitalebene. Bei gleichen Krümmungsradien der Schnittkurven 20 und 22 wäre die Schnittweite für den Strahlfokuspunkt in der Saggitalebene größer als die Schnittweite in der Meridionalebene. Diese beiden Schnittweiten würden sich unter dieser Voraussetzung durch den Faktor cos α unterscheiden, wobei α die Größe des Einfallswinkels 13 des Laserstrahls 1 gegenüber der Normalen 27 im Scheitelpunkt 26 der Hohlspiegelmembran 4 ist.

Nach einem weiteren Aspekt der Erfindung wird daher der Krümmungsradius 30 der Schnittkurve 20 (Meridionalebene) um soviel größer gewählt als der Krümmungsradius 31 der Schnittkurve 22 (Saggitalebene), daß die Schnittweiten 25 für die Meridionalebene und die Saggitalebene gleich sind. Der Fokuspunkt ist mit 24 bezeichnet, die Achsdurchmesser mit 28, 29. Da sich diese Krümmungsradien nach früher Gesagtem durch eine erzwungene Durchbiegung in der Mitte der Hohlspiegelmembran 4 von selbst einstellen, wird die Hohlspiegelmembran jetzt nicht kreisförmig sondern elliptisch bzw. oval ausgeführt.

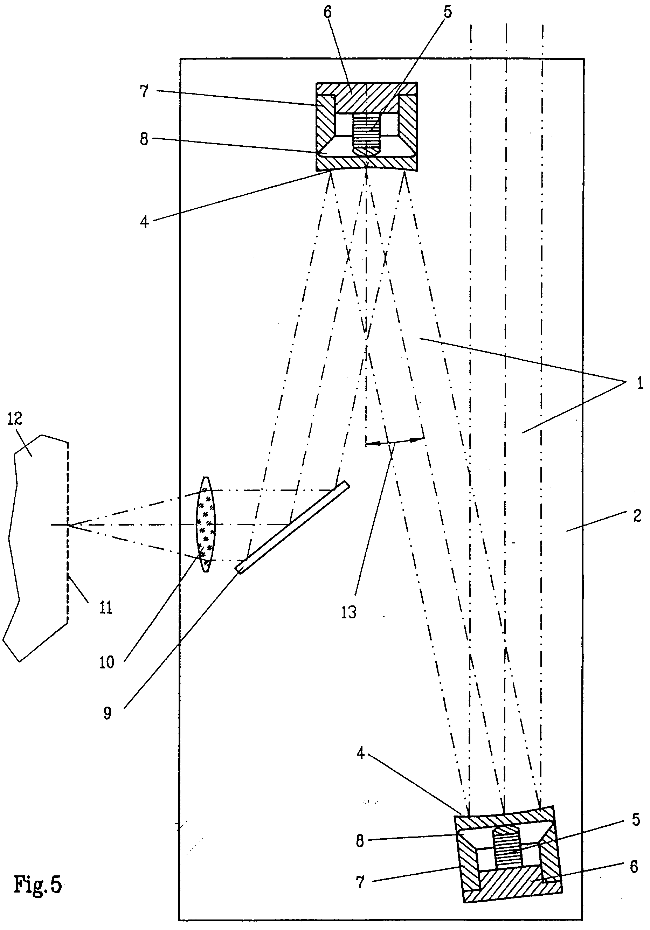

Ein drittes Ausführungsbeispiel der Erfindung ist in der Figur 5 dargestellt, wobei zwei Hohlspiegel mit einstellbaren Hohlspiegelmembranen 4 vorhanden sind. Eine derartige Anordnung wird gewählt, wenn entweder die nachzuregelnden Abweichungen so groß werden, daß die erforderlichen Stellwege die zulässigen Dauerwechsel- bzw. Dauerschwellfestigkeiten des Werkstoffes für die Hohlspiegelmembranen 4 einschließlich der Verspiegelungsschichten überschreiten würden, oder wenn Stellzeiten noch weiter reduziert werden sollen. Da sich grundsätzlich die Kehrwerte der Brennweiten bei einer zusammengesetzten Optik zu einem gemeinsamen Kehrwert der Summenbrennweite addieren, kann man auch durch die zweifache Anordnung von Hohlspiegelmembranen 4 die piezogeregelte Brennweite halbieren und dadurch den Nachregelweg vergrößern. Ganz analog gilt, daß für die n-fache Anordnung solcher Hohlspiegelmembranen der Nachregelweg auf das n-fache gesteigert werden kann.

Natürlich kann mit der gezeigten Fokussierungseinrichtung durch Verlagerung der Strahltaille auch eine Größenregelung des Brennflecks vorgenommen werden. Verlangt also etwa eine Schablonengravur unterschiedliche Durchmesser des Fokusquerschnitts, so kann dies durch Verlagerung der Strahltaille innerhalb der bei Piezoanordnungen üblichen Stellzeiten herbeigeführt werden. Eine solche Anwendung wird z. B. im Rahmen der Halbtontechnik gefordert.

Beim dritten Ausführungsbeispiel nach Figur 5 ist es außerdem möglich, den Einfallswinkel (Winkel zwischen der Strahlachse und der Normalen zur Spiegelmembranoberfläche) und den Austrittswinkel und damit die gesamte Ablenkung des Strahlengangs bei der Spiegelung an einer Hohlspiegelmembran verhältnismäßig kleinzuhalten. Dadurch kann der Fehlbetrag, um welchen sich der Fokus in der Saggitalebene gegenüber jenem in der Meridionalebene unterscheidet, so klein gehalten werden, daß er nicht mehr stört. Natürlich wird die hierfür zulässige Toleranz vom jeweiligen Anwendungsfall und insbesondere vom angestrebten Durchmesser des Fokusflecks abhängen.

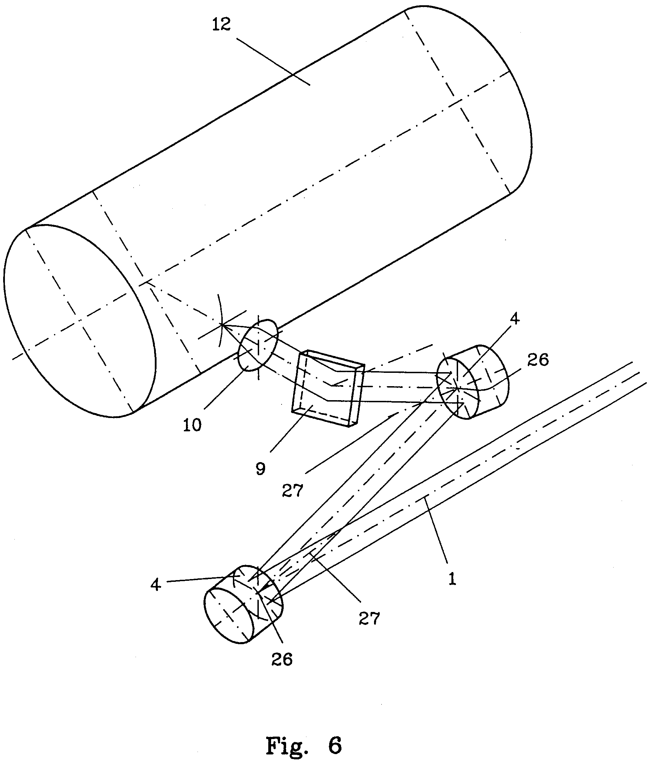

Ein viertes Ausführungsbeispiel der Erfindung ist in Figur 6 gezeigt. Es handelt sich hier um eine weitere Möglichkeit zur Korrektur des Strahlengangs bei Verwendung von zwei Hohlspiegelmembranen 4, um den Fehler in der Abweichung der Brennweiten der Saggital- und der Meridionalebene weiter zu verringern. Der Laserstrahl 1 verläuft hier nicht mehr in einer Ebene sondern ist räumlich abgelenkt. Der Grundgedanke ist hierbei der, daß durch ein räumliches Versetzen der beiden Hohlspiegelmembranen 4 und eine entsprechende Kippung ihrer Normalen 27 die Randstrahlen in zwei ursprünglich zueinander senkrecht stehenden Ebenen durch die Strahlachse - etwa der Saggitalebene und der Meridionalebene - gleich große Ablenkungen erfahren und eine Abweichung der Brennweiten dieser Strahlengänge nicht mehr auftritt. Dies kann man durch eine räumliche Anordnung von zwei oder mehr Hohlspiegelmembranen 4 erreichen.

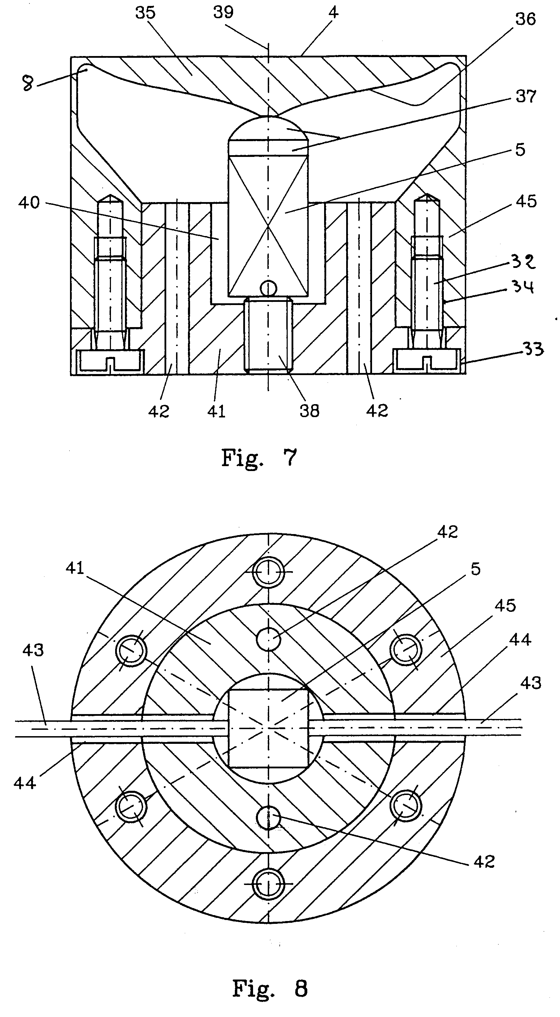

Die Figur 7 zeigt einen Achsschnitt durch eine rotationssymmetrisch aufgebaute Spiegeleinrichtung, während die Figur 8 einen Grundriß der Spiegeleinrichtung in Figur 7 zeigt. Die Krümmung der Hohlspiegelmembran 4 ist im allgemeinen so klein (Scheitelhöhe 15 μm bis 20 μm), daß sie in einer die geometrischen Verhältnisse richtig wiedergebenden Zeichnung nur als gerade Schnittlinie dargestellt werden kann. Durch die Einwirkung des Piezoelements 5 muß sich die spiegelnde Oberfläche der Hohlspiegelmembran nach einer bestimmten Weise deformieren. Die Neigungswinkel der Normalen gegenüber der Achse 39 müssen linear mit dem von dieser Achse 39 aus gemessenen Radius anwachsen. Damit sich die Wandung 35 der Hohlspiegelmembran 4 jedoch in dieser Weise verformt, muß für die Unterseite 36 der Wandung 35 ein streng definierter Kurvenverlauf eingehalten werden, der sich z. B. numerisch durch eine FEM-Analyse ermitteln läßt und in Figur 7 maßstäblich dargestellt ist. Von dem verwendeten Piezoelement 5 hängt es ab, ob das Piezoelement 5 mit einem darauf angeklebten Druckstück 37 über eine Stellschraube 38 im elektrisch spannungslosen Zustand gegen die Wandung 35 so lange angestellt wird, bis die ursprünglich sphärisch gefertigte Hohlspiegelmembran 4 gerade ist oder ob das Piezoelement 5 nur leicht gegen diese Wandung 35 gepresst wird und hierbei die sphärische Form der Hohlspiegelmembran 4 nur wenig verringert wird. Entscheidend hierfür ist, ob sich das Piezoelement unter einer angelegten elektrischen Spannung verlängert oder verkürzt. Verkürzt sich das Piezoelement 5, dann wird man dieses solange gegen die Wandung 35 anstellen, bis die Hohlspiegelmembran 4 einen geraden Verlauf zeigt. Durch das Anlegen einer elektrischen Spannung verkürzt sich dann das Piezoelement 5 und die Hohlspiegelmembran 4 erreicht schließlich bei voller elektrischer Spannung nahezu den Verlauf, welchen sie ursprünglich aufgewiesen hat. Natürlich kann man in jedem Fall eine geringe mechanische Vorspannung belassen, damit das Piezoelement 5 zusammen mit dem an seiner Stirnseite aufgeklebten Druckstück 37 stets mit einer ausreichenden Kraft zwischen Wandung 35 und Stellschraube 38 gehalten wird. Man kann einen Hohlraum 40 zwischen dem Piezoelement 5 und einem Verschlußdeckel 41 mit einem elastischen Harz ausgießen. Durch Absorption der Laserstrahlung und auch durch kapazitive Erwärmung des Piezoelements 5 steigt die Temperatur der Einrichtung. Durch Bohrungen 42 im Verschlußdeckel 41 kann daher ein Kühlmedium (Luft, Siliconöl, usw.) zu- und wieder abgeführt werden. Ist dieses Kühlmedium eine Flüssigkeit, so kann auch ein mechanischer Dämpfungseffekt auf die Wandung 35 bei schnellen Stellbewegungen ausgeübt werden. Elektrische Anschlüsse 43 des Piezoelements 5 werden durch Bohrungen 44 herausgeführt, die sowohl den Verschlußdeckel 41 als auch einen Gehäusemantel 45 durchsetzen. Im Falle eines flüssigen Kühlmediums sind diese Bohrungen 44 ebenfalls mit einem elastischen Harz oder einer Vergußmasse abgedichtet.

Die Hohlspiegelmembran 4 und der Gehäusemantel 45 sind hier einstückig miteinander verbunden und bilden eine Art zylindrischen Topf. Dabei stellt die Hohlspiegelmembran 4 den Boden dieses Topfs dar. Der Topf wird mit Hilfe des Verschlußdeckels 41 verschlossen, und zwar mit Hilfe von Schrauben 32, die durch Öffnungen 33 im äußeren Umfangsrand des Verschlußdeckels 41 hindurchragen und in Sacklochgewindebohrungen 34 hineingeschraubt sind, die sich in der Wand des Gehäusemantels 45 befinden.

Das Piezoelement 5 liegt koaxial zur zentralen Topfachse 39 und erstreckt sich in dessen Längsrichtung. Parallel dazu verlaufen die Achsen der Bohrungen 42 und der Schrauben 32. Das Druckstück 37 des Piezoelements 5 beaufschlagt die Rückseite der Hohlspiegelmembran 4 ebenfalls auf der zentralen Achse 39, wobei die Hohlspiegelmembran 4 auf der zentralen Achse 39 ihre größte Dicke aufweist und sich am weitesten ins Topfinnere erstreckt. Ausgehend von der zentralen Achse 39 in Radialrichtung gesehen nimmt die Dicke des Hohlspiegelelements 4 entsprechend einem vorbestimmten Verlauf zunächst stärker, dann weniger stark ab und durchläuft einen Wendepunkt, um danach weiter abzunehmen, bis die bereits eingangs erwähnten Eindrehungen 8 erreicht sind, die in Topfumfangsrichtung an der Innenseite des Topfbodens verlaufen.

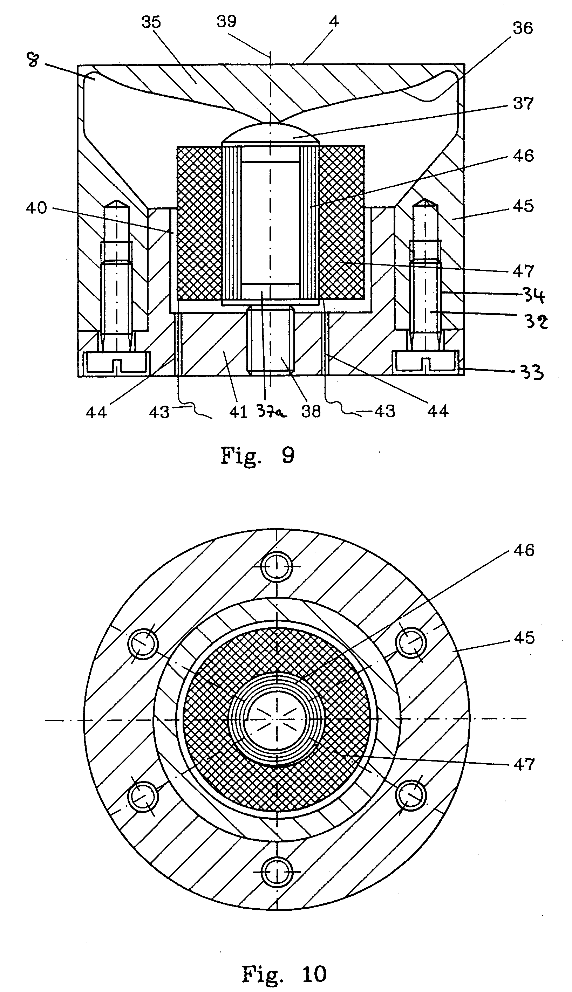

Die Figuren 9 und 10 zeigen eine Spiegeleinrichtung mit magnetostriktivem Verstellelement. Dabei ist die Figur 9 ein Achsschnitt durch die Spiegeleinrichtung, während die Figur 10 einen Grundriß zeigt. Auch hier ist die Spiegeleinrichtung wieder rotationssymmetrisch aufgebaut und es gelten im übrigen die gleichen Bezugszeichen wie in den Figuren 7 und 8. Ein dünnes Blech aus Reinnickel ist hier spiralförmig zu einem hohlen, etwa kreiszylindrischen Kernstück 46 aufgewickelt, welches von einem Spulenkörper 47 umschlossen wird. Windungen des Spulenkörpers 47, die koaxial zur Zentralachse 39 gewickelt sind, sind mit elektrischen Anschlüssen 43 verbunden, die über Durchgangsbohrungen 44 nach außen geführt sind. Legt man an diese elektrischen Anschlüsse 43 eine elektrische Spannung an, so fließt ein Strom durch die Windungen des Spulenkörpers 47, so daß sich durch den Einfluß des sich aufbauenden Magnetfelds das Kernstück 46 verkürzt.

Dieses hohlzylindrische Kernstück 46 liegt, wie bereits erwähnt, mit seiner Zylinderachse koaxial zur Zentralachse 39 der Spiegeleinrichtung. Dabei ist das Druckstück 37 oben in das Kernstück fest eingesetzt. Unter sitzt das Kernstück mit seiner anderen Stirnseite auf einem Ansatz 37a, der seinerseits von der Stellschraube 38 beaufschlagt wird. Auf der Außenseite des Kernstücks 46 liegt koaxial zu diesem bzw. zur Zentralachse 39 der Spulenkörper 47 mit seinen um das Kernstück 46 herumgeführten Windungen. Ansonsten entspricht der Aufbau des Spiegelkörpers nach den Figuren 9 und 10 dem Aufbau des Spiegelkörpers nach den Figuren 7 und 8.

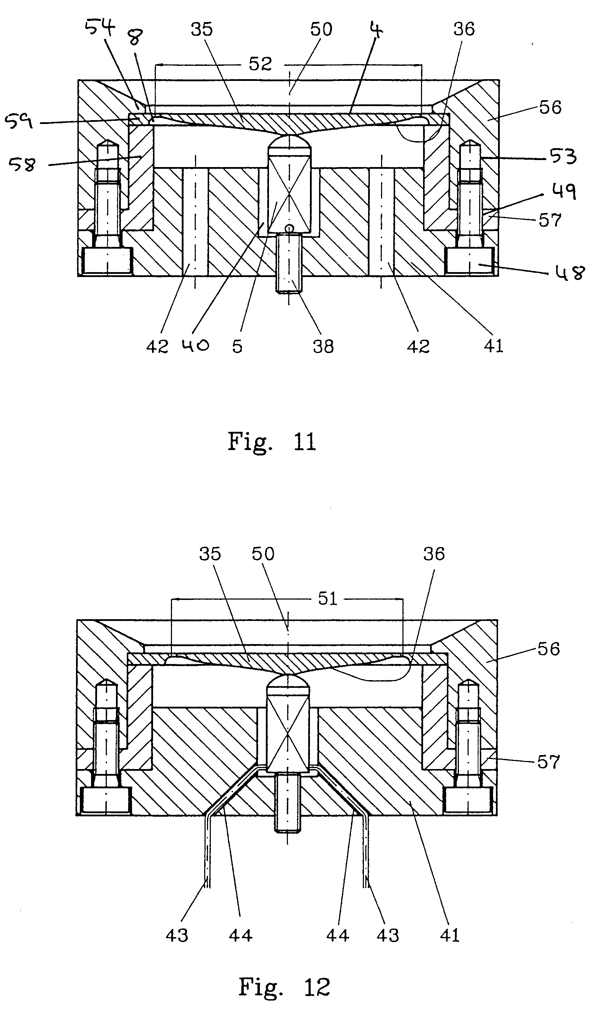

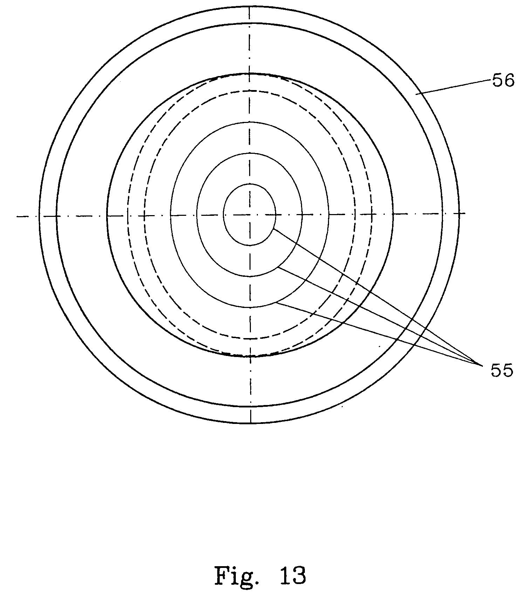

Die Figuren 11, 12 und 13 zeigen eine Spiegeleinrichtung, die mit einer im Grundriß elliptischen Hohlspiegelmembran 4 ausgerüstet ist. Diese Hohlspiegelmembran 4 hat in zwei zueinander senkrechten Schnitten durch die Zentralachse 50 unterschiedliche Durchmesser 51, 52 der biegeaktiven Membranzone. Da es fertigungstechnisch schwierig ist, eine solche Membranform im Innern eines Hohlkörpers anzufertigen, wird die Membran als Plättchen ausgebildet und erhält ihre deformationsanalytisch korrekte Form durch Formfräsen der Rückseite. Die Rückseite 36 der Wandung 35 zeigt auch hier wieder den charakteristischen abnehmenden Verlauf der Wanddicke mit zunehmendem Radius, wobei Höhenschichtenlinien 55 dieser Rückseite 36 hier jedoch nicht Kreise sondern Ellipsen bzw. Ovale sind. Dies ist in Figur 13 am besten zu erkennen. Die Hohlspiegelmembran 4 wird schließlich zwischen einem Außenringteil 56 und einer Brille 57 eingeklemmt. Der Verschlußdeckel 41 hält wie schon früher das Piezoelement 5. Vorliegend sind Schrauben 48 durch randseitige Durchgangsöffnungen des Verschlußdeckels 41 sowie ferner durch randseitige Durchgangsöffnungen 49 in einem Flansch der Brille 57 hindurchgesteckt und in entsprechende Gewindebohrungen 53 hineingeschraubt, die sich im Wandbereich des Außenringteils 56 befinden. Dieser Außenringteil 56 weist einen Innenflansch 54 auf, auf den innen die Hohlspiegelmembran 4 aufliegt. Sie wird mit Hilfe der Brille 57 gegen diesen Innenflansch gedrückt. Dabei weist die Brille 57 einen koaxial zur Zentralachse 50 liegenden Hohlzylinder 58 auf, der passend im Außenringteil 56 sitzt und mit seiner Stirnseite gegen einen Umfangsabschnitt 59 der Hohlspiegelmembran 4 drückt, welcher in Radialrichtung gesehen außerhalb der Eindrehung 8 liegt. Der Verschlußdeckel 41 hält wie schon früher das Piezoelement 5. Ein Raum 40 zwischen dem Piezoelement 5 und dem Verschlußdeckel 41 kann wiederum mit einer geeigneten Vergußmasse verschlossen sein. Ansonsten gelten die gleichen Bezeichnungen wie in den Figuren 7 bis 10.

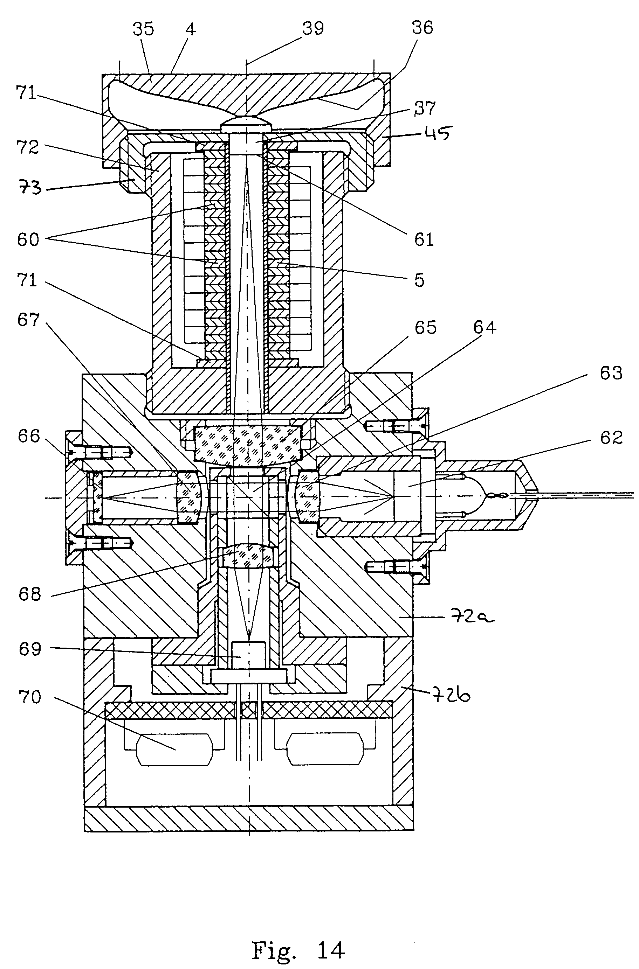

Die Figur 14 zeigt eine piezoelektrisch betätigte Spiegeleinrichtung, bei welcher die tatsächlich eingetretene Lageänderung über eine interferometrische Meßeinrichtung festgestellt werden kann. Das Piezoelement 5 ist aus kleinen, ringförmigen Scheiben 60 zusammengesetzt, die einen koaxial zur Zentralachse 39 liegenden Hohlzylinder bilden. Das Druckstück 37 ist oben stirnseitig in diesen Hohlzylinder eingesetzt und trägt an seiner Rückseite einen optischen Spiegel 61, der ins Innere des Hohlzylinders weist. Eine Laserdiode 62 sendet über eine Linse 63 (Achromat) ein Lichtbündel zu einem Strahlteiler 64, welcher 50% der Lichtintensität über eine Linse 65 (Achromat) auf den Spiegel 61 an der Rückseite des Druckstücks 37 fokussiert und die anderen 50% der Lichtintensität auf eine feststehende Spiegeloberfläche 66 über eine Linse 67 auftreffen läßt. Die vom Spiegel 61 und vom Spiegel 66 reflektierten Strahlen laufen wieder über den Strahlteiler 64, und es werden von diesen je 50% der Intensität über eine weitere Linse 68 auf eine Photodiode 69 fokussiert. Bei Lageänderungen des Druckstücks 37 entstehen auf der Oberfläche der Photodiode 69 Interferenzen, die einen entsprechend veränderlichen Diodenstrom auslösen. Dieser wird durch eine Verstärkerschaltung 70 so weit vorverstärkt, daß er an eine nicht mehr dargestellte Auswertelogik weitergeleitet werden kann. Diese Auswertelogik wertet in an sich bekannter Weise die übermittelte Information aus, z. B. durch Zählen der Hell-/Dunkel-Ereignisse, und mißt ggf. zusätzlich die Spannung, um zu einer feineren Auflösung zu gelangen. Das Piezoelement 5 ist durch keramische Scheiben 71 vom metallischen Gehäuse 72 isoliert, wobei dieses metallische Gehäuse 72 an seiner unteren Stirnseite eine zentrale Durchgangsöffnung für den Durchtritt des zum Spiegel 61 gelangenden Lichtstrahls aufweist. Oben bzw. an der anderen Stirnseite ist das metallische Gehäuse 72 durch eine Stirnmembran 73 abgeschlossen, welche auf ein oberes Außengewinde am Gehäuse 72 aufgeschraubt ist. Die Stirnmembran 73 weist eine zentrale Durchgangsöffnung zur Aufnahme des Druckstücks 37 auf. Das Piezoelement 5 wird somit vom Gehäuse 72 und der Stirnmembran 73 umschlossen. Diese Stirnmembran 73 ist verhältnismäßig dünn ausgebildet, um dessen Längendehnung möglichst nicht zu behindern.

Auf die Stirnmembran 73 ist auf ein entsprechendes äußeres Umfangsgewinde der Gehäusemantel 45 für die Hohlspiegelmembran 4 über ein entsprechendes Innengewinde aufgeschraubt. Der Gehäusemantel 45 ist auch hier einstückig mit der Hohlspiegelmembran 4 verbunden, die mit ihrem zentralen Innenansatz gegen das Druckstück 37 schlägt. An der anderen Stirnseite ist das Gehäuse 72 in ein Trägergehäuse 72a eingesetzt bzw. eingeschraubt. In diesem Trägergehäuse 72a befinden sich die zuvor erwähnten optischen Elemente 63, 64, 65, 66, 67 und 68 in den jeweiligen optischen Kanälen, wobei weiterhin an dieses Trägergehäuse 72a die Laserdiode 62 und die Photodiode 69 angesetzt sind. Letztere ist mit der Verstärkerschaltung 70 verbunden, die sich in einem Gehäuseteil 72b befindet, das mit dem Gehäuseteil 72a verbunden ist.

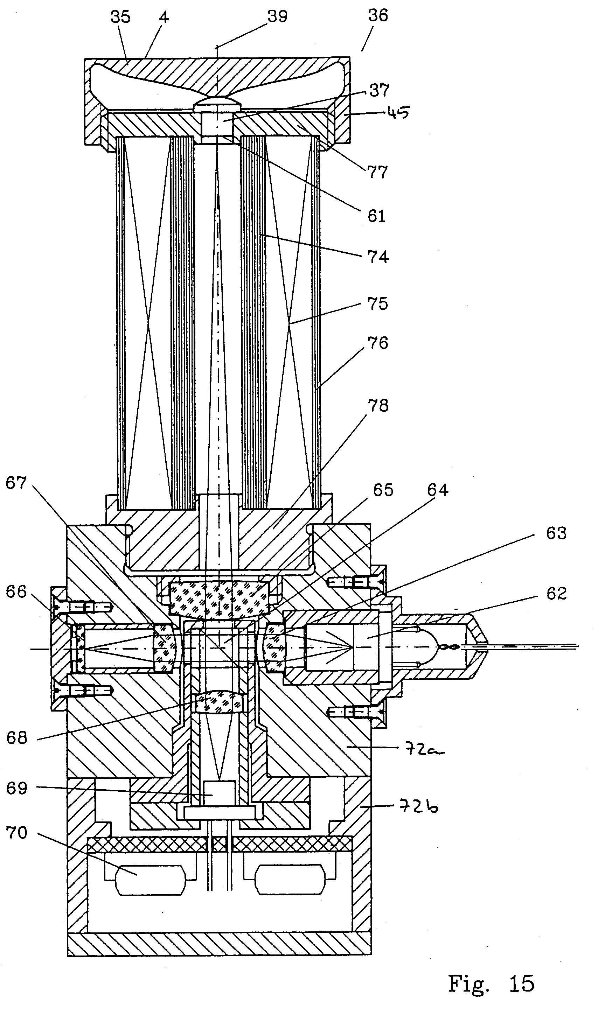

Die Figur 15 zeigt im Prinzip die gleiche Einrichtung wie in Figur 14, jedoch ist jetzt ein magnetostriktives Stellelement vorhanden. Ein innerer Hohlzylinder 74 ist durch ein spiralförmig aufgewickeltes und durch Epoxidharz verklebtes dünnes Nickelblechband gebildet. Dieser Hohlzylinder 74 wird von einem Windungspaket 75 umschlossen und dieses von einem äußeren Hohlzylinder 76. Dieser äußere Hohlzylinder 76 kann in der gleichen Weise aufgebaut sein wie der innere Hohlzylinder 74. Gehäuseendscheiben 77 und 78 sind stirnseitig gemeinsam mit den Hohlzylindern 74 und 76 und dem Windungspaket 75 verklebt bzw. vergossen. Dabei weist die Gehäuseendscheibe 77 eine zentrale Durchgangsöffnung für die Aufnahme des Druckstücks 37 auf, das an seiner unteren Seite den Spiegel 61 trägt, der ins Innere des Hohlzylinders 74 weist. Die Gehäuseendscheibe 78 ist mit einer zentralen Durchgangsöffnung versehen, durch die hindurch der Strahl auf den Spiegel 61 auftrifft. Dabei ist die Gehäuseendscheibe 78 über ein geeignetes Umfangsaußengewinde in das Trägergehäuse 72a eingeschraubt. Auf der oberen Gehäuseendscheibe 77 ist wiederum die Gehäusewand 45 aufgeschraubt, mit der einstückig die Hohlspiegelmembran 4 verbunden ist.

Durch Einfluß eines stärkeren oder schwächeren Stroms durch das Windungspaket 75 bzw. durch den Einfluß des damit verbundenen Magnetfelds verlängern oder verkürzen sich die Hohlzylinder 74 und 76 und verstellen somit die Hohlspiegelmembran 4.

Nachfolgend wird der Gesamtaufbau der erfindungsgemäßen Vorrichtung näher beschrieben, die z. B. zur Herstellung von Siebdruckschablonen eingesetzt wird.

Eine Siebdruckschablone trägt das Bezugszeichen 79, während der Hohlzylinder mit dem Bezugszeichen 80 versehen ist. Auf ihm befindet sich ein Schablonenmuster 81, und zwar innerhalb einer Lackschicht 82, die auf der äußeren Umfangsoberfläche des Hohlzylinders 80 liegt. Der Hohlzylinder 80 ist in diesem Fall z. B. ein gleichmäßig perforierter Nickelzylinder.

Die Siebdruckschablone 79 wird an ihren einander gegenüberliegenden Stirnseiten durch jeweils einen Spannkopf 83 bzw. 84 gehalten, die als Zentrierflansche ausgebildet sind. Diese Spannköpfe 83, 84 sind jeweils in einer Lagerschale 85, 86 drehbar gelagert. Die Lagerschalen 85, 86 stützen sich auf einem Maschinenbett 87 ab, und zwar über Stützeinrichtungen 88, 89.

Die Stützeinrichtung 89 kann vom Maschinenbett 87 abgenommen oder relativ zu diesem in Längsrichtung des Siebdruckzylinders 79 verschoben werden, damit dieser leichter zwischen den Spannköpfen 84, 83 positioniert oder aus dem zwischen ihnen liegenden Bereich wieder herausgenommen werden kann.

Ein mit dem linken Spannkopf 84 verbundener Hohlwellenabschnitt 90 erstreckt sich in die Lagerschale 85 und ist dort drehbar gelagert. Dieser Hohlwellenabschnitt 90 wird über einen Antriebsstrang in Drehung versetzt, der durch die Stützeinrichtung 88 hindurchläuft bis zu einem Antriebsmotor, der im Maschinenbett angeordnet ist. Bei Drehung des Hohlwellenabschnitts 90 wird durch ihn der Spannkopf 84 mitgenommen, so daß die Siebdruckschablone 79 dadurch in Drehung versetzt wird. Der andere Spannkopf 83 läuft frei um und ist über einen Hohlwellenabschnitt 91 in der Lagerschale 86 gelagert.

Beide Hohlwellenabschnitte 90 und 91 enden im Bereich der Spannköpfe 84 bzw. 83, erstrecken sich also nicht in die Siebdruckschablone 79 hinein, und sind ferner an ihren den Spannköpfen 84, 83 abgewandten Enden dicht mit Strömungskanälen 92 und 93 verbunden.

Ein mit dem freien Ende des Hohlwellenabschnitts 90 verbundener Drehwinkelgeber 94 informiert über eine Steuerleitung 95 einen Rechner 96 mit zugehörigem Monitor 97 über die jeweilige Drehlage der Siebdruckschablone 79. Dabei gibt der Rechner 96 entsprechende Ein- bzw. Ausschaltimpulse an einen Laser 98 über eine Steuerleitung 99. Ein Laserstrahl 100 des Lasers 98 wird entsprechend dieser Ein- bzw. Ausschaltimpulse emittiert oder nicht emittiert. Über einen ersten Umlenkspiegel 101 wird der Laserstrahl 100 einem zweiten Umlenkspiegel 102 zugeleitet, der gemeinsam mit einer Fokussierungslinse 103 auf einem Optikschlitten 104 montiert ist, der bewegbar auf einem Verstellschlitten 105 angeordnet ist. Der Verstellschlitten 105 stützt sich, wie noch erläutert wird, indirekt am Maschinenbett 87 ab, das beispielsweise auf dem Boden steht, ebenso wie ein Ständer 106 zur Halterung des ersten Umlenkspiegels 101.

Im Bereich zwischen dem ersten Umlenkspiegel 101 und dem zweiten Umlenkspiegel 102 verläuft der Laserstrahl 100 parallel zur Zylinderachse 107 der Siebdruckschablone 79 und wird durch den zweiten Umlenkspiegel 102 so abgelenkt, daß er wenigstens annähernd radial auf den Hohlzylinder 80 zuläuft. Dabei wird er durch die Fokussierungslinse 103 auf die Lackschicht 82 fokussiert.

Der Verstellschlitten 105 ist in Richtung der Zylinderachse 107 der Siebdruckschablone 79 verschiebbar. Diese Verschiebung wird durch eine Spindel 108 und einen diese Spindel antreibenden Motor 109 bewirkt. Eine Rundführung 111a und eine Prismenführung 111b sorgen für eine zur Zylinderachse 107 der Siebdruckschablone 79 genau parallele Bewegung des Verstellschlittens 104. Dabei befindet sich die Prismenführung 111a auf der oberen Fläche des Maschinenbetts 87, während die Spindel 108 und die Rundführung 109 an der Vorderseite des Maschinenbetts 87 parallel zueinander angeordnet sind.

Innerhalb des Maschinenbetts 87 befinden sich Gasfördereinrichtungen, von denen jeweils eine mit einem der Strömungskanäle 92 und 93 verbunden ist. Durch diese Gasfördereinrichtungen läßt sich ein Druckgas über die Strömungskanäle 92, 93, die Hohlwellenabschnitte 90, 91 und die Spannköpfe 84, 83 ins Innere der Siebdruckschablone 79 blasen. Mit dem Gas kann auch ein Abdichtmittel ins Innere des Siebdruckzylinders 79 hineingeblasen werden, um von der Lackschicht 82 befreite Öffnungen im Hohlzylinder 80 von innen abzudichten, falls erforderlich. Bei dem Abdichtmittel kann es sich z. B. um Materialschnitzel, beispielsweise Papierschnitzel, oder Kunststoffscheibchen, und dergleichen, handeln, die auch eine reflektierende Oberfläche aufweisen können.

Der Motor 109 zum Antrieb der Spindel 108 ist vorzugsweise ein Schrittmotor, so daß sich durch die Ansteuerimpulse für den Schrittmotor 109 auch die Axialposition des auf den Hohlzylinder 80 auftreffenden Laserstrahls 100 bestimmen läßt. Entsprechende Ansteuerimpulse empfängt der Schrittmotor 109 vom Rechner 96 über eine Leitung 110.

Mit dem Verstellschlitten 105 ist z. B. einstückig ein Bügel 112 verbunden, der unterhalb der Siebdruckschablone 79 zu liegen kommt und diese im Abstand z. B. teil- bzw. halbkreisförmig umgibt. Der Bügel 112 wird somit bei Bewegung des Schlittens 105 in Richtung der Zylinderachse 107 entsprechend mitbewegt. Am Bügel 112 befestigt bzw. in diesen eingelassen ist ein Abstandssensor 113, der radial zur Siebdruckschablone 79 ausgerichtet den Abstand zwischen ihm und der Oberfläche der Siebdruckschablone 79 bzw. dem Hohlzylinder 80 mißt. Die Abstandsmeßsignale gelangen über eine Leitung 114 zum Rechner 96. Durch diesen Abstandssensor 113 werden an fester Meßposition radiale Abweichungen der tatsächlichen Lage der Wand des Hohlzylinders 80 von dessen idealer Lage für eine Vielzahl von Umfangspositionen des Hohlzylinders 80 gemessen, wenn sich dieser dreht. Die jeweiligen Meßsignale werden dann im Rechner 96 verarbeitet, um aus den gemessenen Abständen zwischen Sensor und Hohlzylinderoberfläche die radialen Lageabweichungen am Ort des Auftreffpunkts des Laserstrahls 100 auf den Hohlzylinder zu ermitteln, und zwar unter Berücksichtigung des Drehwinkels zwischen Sensor und Laserstrahl-Auftreffpunkt. Hieraus werden Stellsignale gewonnen, die dazu verwendet werden, den Fokus des Laserstrahls 100 ständig im Bereich der Lackschicht 82 zu halten, was durch entsprechende Verstellung des Spiegels 102 erfolgt. Das Stellsignal zur Verstellung des Spiegels 102 wird diesem über eine Leitung 115 vom Rechner 96 zugeführt, der auch mit einem Datenspeicher 116 ausgestattet ist, z. B. einer Kassette. In diesem Datenspeicher sind die optomechanischen Werte des Spiegels 102 z. B. in Form von Tabellen für verschiedene Fokuspositionen gespeichert, so daß sich anhand dieser Tabellen entsprechende Stellsignale ermitteln bzw. errechnen lassen, wenn die durch den Sensor ermittelten Abstände vorgegeben werden.

Leider sind dünnwandige Siebdruckschablonen keine idealen kreiszylindrischen Körper. Sie weisen sowohl in ihrer Längserstreckung als auch in ihrem Querschnitt Abweichungen von der Idealform des Kreiszylinders auf, welche eine passgenaue Musteraufbringung behindern und erfordern, daß diese Rundlaufabweichungen z. B. durch Messen und Einleitung geeigneter Korrekturmaßnahmen in ihren Auswirkungen unschädlich gemacht werden.

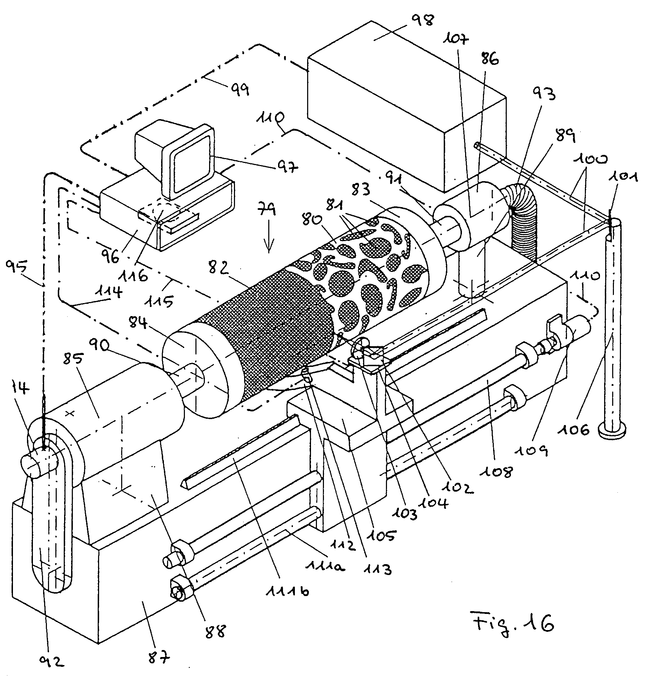

Bei einer typischen Lasergravureinrichtung dreht sich der Siebdruckzylinder mit etwa 1.200 Umdrehungen pro Minute, also mit einer Winkelfrequenz von 15 bis 20 Hz. Vernachlässigt man bei einer Fourieranalyse der auftretenden Rundlaufabweichungen Glieder ab der 100sten Ordnung, so ist es erforderlich, die Nachstellung des Fokuspunkts des Laserstrahls 100 mit einer Frequenz bis zu 2 kHz durchzuführen. Dies kann ohne weiteres mit dem erfindungsgemäßen Ablenkspiegel erfolgen, der in Figur 16 der Ablenkspiegel 102 ist. Seine Betriebsfrequenz könnte ohne weiteres auf 6 kHz erhöht werden. Natürlich kann die in Figur 16 gezeigte Kombination aus Ablenkspiegel 102 und Fokussierungslinse 103 auch durch irgendeine andere der zuvor beschriebenen Linsen-Ablenkspiegel-Kombinationen ersetzt werden. Dabei liegen die Abstände zwischen Spiegel und Linsensystem in der Größenordnung der jeweiligen Brennweiten, so daß die eingangs genannte Beziehung (1) für die Gesamtbrennweite eines kombinierten Linsen-Spiegel-Systems erfüllt ist. Übliche Einfallswinkel liegen vorzugsweise in Bereichen von 5 bis 45°.

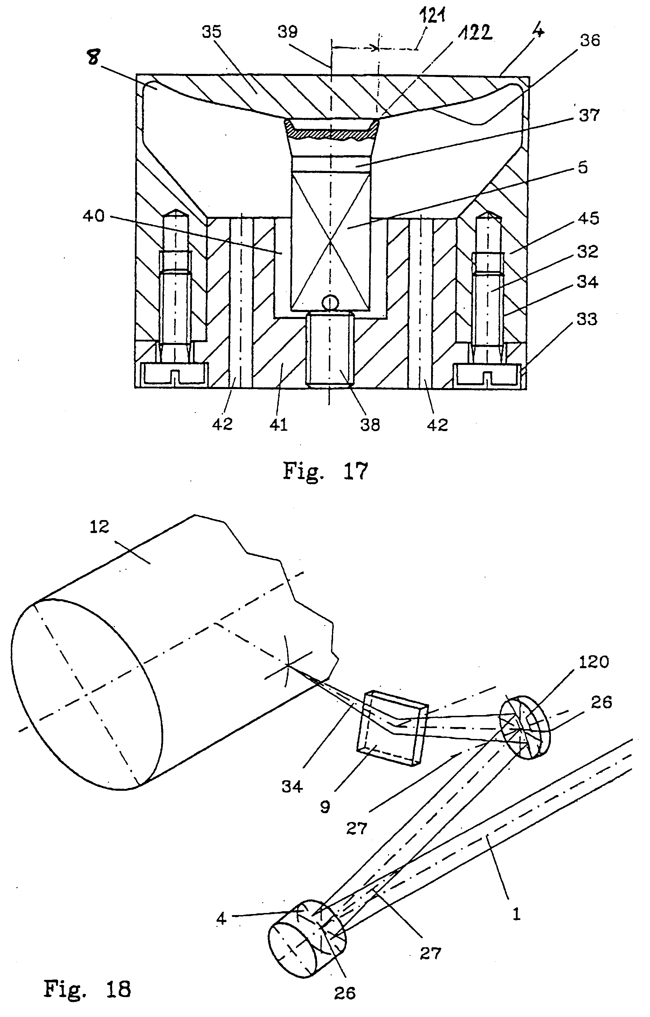

In Figur 17 wird ein Ausführungsbeispiel gezeigt, bei welchem die Rückseite 36 der Wandung 35 der Spiegelmembran 4 nicht mehr durch eine zentrale Stellkraft beaufschlagt wird, sondern diese Stellkraft wirkt hier auf einen Kreis mit einem sich von Null unterscheidenden Radius 121. Zu diesem Zweck ist am Druckstück 37 eine Ringschneide 122 ausgebildet, welche auf die Unterseite 36 der Wandung 35 einwirkt. Da die Wandung 35 ab diesem Radius 121 frei von in der Wandung wirkenden Querkräften ist, muß die Unterseite 36 für Radien, die kleiner sind als der Radius 121, einen anderen Verlauf ihrer Kontur aufweisen als für Radien, die größer sind als der Radius 121. Die richtige Formgebung der Kontur der Wandung 35 innerhalb des Radius 121 kann durch eine FEM-Analyse bestimmt werden, wie dies schon früher beschrieben worden ist.

In Figur 18 wird eine Ausbildung der Laser-Fokussierungsoptik gezeigt, welche ausschließlich Oberflächenspiegel verwendet. Der Laserstrahl 1 wird zunächst von einer schon gezeigten piezogeregelten Hohlspiegelmembran 4 umgelenkt und einem Hohlspiegel 120 zugeleitet, der einen sehr viel stärkeren Krümmungsverlauf seiner reflektierenden Oberfläche aufweist als die Hohlspiegelmembran 4. Um bei dem Hohlspiegel 120 große Einfallswinkel und damit starken Astigmatismus zu vermeiden, ist ein weiterer Umlenkspiegel 9 vorgesehen, der eben ausgebildet ist und für die Umlenkung des jetzt schon fokussierten Laserstrahls auf die Schablone 12 sorgt. Die Richtung des Laserstrahls 1 verläuft ab dieser letzten Umlenkung hier im wesentlichen entlang der Flächennormalen durch den Gravurpunkt auf der Schablone 12. In Sonderfällen kann diese Richtung aber auch anders gewählt werden. Wünscht man z. B. in Umfangsrichtung der Schablone eine andere Gravierbreite als in der Achsrichtung der Schablone, so kann man dem Laserstrahl 1 eine andere Auftreffrichtung auf die Schablone erteilen. Selbstverständlich kann man auch den Hohlspiegel 120 so ausbilden, daß dieser eine Veränderung seiner Krümmung durch ein in seinem Inneren angeordnetes geregeltes Piezoelement erfährt. Die Krümmungsradien dieses Hohlspiegels 120 werden sich dann bei den geringen Stellwegen der Piezoelemente nur sehr geringfügig ändern. Auch können beide Hohlspiegel 26, 120 in verschiedenen Ebenen liegen, wie bereits im Zusammenhang mit Figur 6 beschrieben worden ist.

## Patentansprüche

1. Vorrichtung zur Herstellung einer Druckschablone (79), insbesondere einer Siebdruckschablone, mit einem drehbar gelagerten Druckzylinder (80), einem Laser (98) zur Erzeugung eines auf den Druckzylinder (80) auftreffenden Laserstrahls (100), der in Längsrichtung (107) des Druckzylinders (80) verschiebbar ist, und einer Fokussierungsoptik, um den Laserstrahl (100) auf die Oberfläche des Druckzylinders (80) zu fokussieren, wobei

   - die Fokussierungsoptik wenigstens einen Ablenkspiegel (26; 102, 120) mit elastisch deformierbarer Spiegelmembran (4) aufweist,
   - Stellmittel (5; 46; 60; 74, 76) vorhanden sind, die in Abhängigkeit eines Stellsignals einen Krümmungsverlauf der Spiegelmembran (4) einstellen,
   - wenigstens ein Sensor (113) zur Messung eines Abstands zwischen ihm und der Oberfläche der Druckschablone (80) vorgesehen ist, und
   - ein Stellsignalgenerator (96) vorhanden ist, der in Abhängigkeit des gemessenen Abstands das Stellsignal erzeugt.

2. Vorrichtung nach Anspruch 1, **dadurch gekennzeichnet,** daß die Stellmittel piezoelektrische Stellmittel (5; 60) sind.

3. Vorrichtung nach Anspruch 1, **dadurch gekennzeichnet,** daß die Stellmittel magnetostriktive Stellmittel (46; 74, 76) sind.

4. Vorrichtung nach einem der Ansprüche 1 bis 3, **dadurch gekennzeichnet,** daß die Spiegelmembran (4) kreisförmig ausgebildet ist.

5. Vorrichtung nach einem der Ansprüche 1 bis 3, **dadurch gekennzeichnet,** daß die Spiegelmembran (4) oval bzw. elliptisch ausgebildet ist.

6. Vorrichtung nach einem der Ansprüche 1 bis 5, **dadurch gekennzeichnet,** daß die Stellmittel einen zentralen hinteren Teil der Spiegelmembran (4) beaufschlagen.

7. Vorrichtung nach einem der Ansprüche 1 bis 5, **dadurch gekennzeichnet,** daß die Stellmittel die Rückseite (36) der Spiegelmembran (4) über eine Ringschneide (122) beaufschlagen.

8. Vorrichtung nach einem der Ansprüche 1 bis 7, **dadurch gekennzeichnet,** daß die Spiegelmembran (4) durch geeignete Formgebung ihrer Rückseite (36) im Zentrum dicker ist als an ihrem Rand.

9. Vorrichtung nach Anspruch 8, **dadurch gekennzeichnet,** daß die Krümmung der Rückseite der Spiegelmembran (4) zwischen ihrem Zentrum und ihrem Rand mindestens einen Wendepunkt aufweist.

10. Vorrichtung nach einem der Ansprüche 1 bis 9, **dadurch gekennzeichnet,** daß der Rand der Spiegelmembran (4) einstückig mit einem Stellmittelgehäuse (45) verbunden ist.

11. Vorrichtung nach einem der Ansprüche 1 bis 9, **dadurch gekennzeichnet,** daß der Rand der Spiegelmembran (4) in einen verdickten Umfangsabschnitt (59) übergeht, der zwischen Stellmittel-Gehäuseteilen (54, 58) eingeklemmt ist.

12. Vorrichtung nach einem der Ansprüche 1 bis 11, **dadurch gekennzeichnet,** daß zur Ermittlung der Position der Spiegelmembran (4) die Position eines Stellkopfs (37) der Stellmittel detektierbar ist.

13. Vorrichtung nach Anspruch 12, **dadurch gekennzeichnet,** daß die Position des Stellkopfs (37) durch Interferenz eines an ihm reflektierten Lichtstrahls mit einem anderen Lichtstrahl detektierbar ist.

**14.** Vorrichtung nach einem der Ansprüche 1 bis 13, **dadurch gekennzeichnet,** daß sich im Laserstrahlengang mehrere Ablenkspiegel mit verstellbarer Spiegelmembran (4) befinden.

**15.** Vorrichtung nach Anspruch 14, **dadurch gekennzeichnet,** daß diese Ablenkspiegel in unterschiedlichen Ebenen angeordnet sind.

**16.** Vorrichtung nach einem der Ansprüche 1 bis 15, **dadurch gekennzeichnet,** daß die Fokussierungsoptik zusätzlich ein fokussierendes Linsensystem (10, 103) enthält.

**17.** Vorrichtung nach einem der Ansprüche 1 bis 16, **dadurch gekennzeichnet,** daß die Fokussierungsoptik auf einem bewegbaren Schlitten (2, 105) angeordnet ist.

## Claims

**1.** Device for producing a printing stencil (79), in particular a screen printing stencil, having a rotatably supported printing cylinder (80), a laser (98) for generating a laser beam (100) incident on the printing cylinder (80) and capable of being displaced in the longitudinal direction (107) of the printing cylinder (80), and focusing optics to focus the laser beam (100) onto the surface of the printing cylinder (80), wherein

- the focusing optics have at least one deflection mirror (26; 102, 120) with an elastically deformable mirror diaphragm (4),
- actuating means (5; 46; 60; 74, 76) are provided which set a curvature of the mirror diaphragm (4) as a function of an actuating signal,
- at least one sensor (113) is provided to measure a distance between itself and the surface of the printing stencil (80), and
- there is an actuating signal generator (96) which generates the actuating signal as a function of the measured distance.

**2.** Device according to Claim 1, characterized in that the actuating means are piezoelectric actuating means (5; 60).

**3.** Device according to Claim 1, characterized in that the actuating means are magnetostrictive actuating means (46; 74, 76).

**4.** Device according to one of Claims 1 to 3, characterized in that the mirror diaphragm (4) is of circular design.

**5.** Device according to one of Claims 1 to 3, characterized in that the mirror diaphragm (4) is of oval or elliptical design.

**6.** Device according to one of Claims 1 to 5, characterized in that the actuating means act on a central rear part of the mirror diaphragm (4).

**7.** Device according to one of Claims 1 to 5, characterized in that the actuating means act on the rear side (36) of the mirror diaphragm (4) via an annular blade (122).

**8.** Device according to one of Claims 1 to 7, characterized in that the mirror diaphragm (4), as a result of suitable shaping of its rear side (36), is thicker in the center than at its edge.

**9.** Device according to Claim 8, characterized in that the curvature of the rear side of the mirror diaphragm (4) has at least one point of inflection between its centre and its edge.

**10.** Device according to one of Claims 1 to 9, characterized in that the edge of the mirror diaphragm (4) is connected integrally to an actuating means housing (45).

**11.** Device according to one of Claims 1 to 9, characterized in that the edge of the mirror diaphragm (4) merges into a thickened peripheral section (59) which is clamped in between actuating means housing parts (54, 58).

**12.** Device according to one of Claims 1 to 11, characterized in that the position of an actuating head (37) of the actuating means can be detected to determine the position of the mirror diaphragm (4).

**13.** Device according to Claim 12, characterized in that the position of the actuating head (37) can be detected by interference of a light beam reflected at it with another light beam.

**14.** Device according to one of Claims 1 to 13, characterized in that a plurality of deflection mirrors with displaceable mirror diaphragms (4) are located in the laser beam path.

**15.** Device according to Claim 14, characterized in that these deflection mirrors are arranged in different planes.

**16.** Device according to one of Claims 1 to 15, characterized in that the focusing optics additionally contain a focusing lens system (10, 103).

**17.** Device according to one of Claims 1 to 16, characterized in that the focusing optics are arranged on a movable slide (2, 105).

## Revendications

1. Dispositif de fabrication d'un gabarit d'impression sérigraphique (79), en particulier d'un écran d'impression sérigraphique comportant un cylindre d'impression (80) monté à rotation, avec un laser (98) destiné à produire un rayon laser (100) venant frapper le cylindre d'impression (80) et déplaçable dans la direction longitudinale (107) du cylindre d'impression (80), et une optique de focalisation, pour focaliser le rayon laser (100) sur la surface du cylindre d'impression (80), dans lequel:

   - l'optique de focalisation présente au moins un miroir déviateur (26, 102, 120) ayant une membrane réfléchissante (4) déformable élastiquement,
   - des moyens de réglage (5, 46, 60, 74, 76) sont présents existants, que réglent, en fonction d'un signal de réglage, une allure de courbure de la membrane réfléchissante (4),
   - au moins un capteur (113) destiné à mesurer l'espacement entre lui-même et la surface du gabarit d'impression (80), et
   - un générateur de signal de réglage (96) est présent, qui émet le signal de réglage en fonction de l'espacement mesuré.

2. Dispositif selon la revendication 1, caractérisé en ce que les moyens de réglage sont des moyens de réglage de nature piézo-électrique (5, 60).

3. Dispositif selon la revendication 1, caractérisé en ce que les moyens de réglage sont des moyens de réglage de nature magnétostrictive (46, 74, 76).

4. Dispositif selon l'une des revendications 1 à 3, caractérisé en ce que la membrane réfléchissante (4) est de forme circulaire.

5. Dispositif selon l'une des revendications 1 à 3, caractérisé en ce que la membrane réfléchissante (4) est ovale ou elliptique.

6. Dispositif selon l'une des revendications 1 à 5, caractérisé en ce que les moyens de réglage agissent sur une partie arrière centrale de la membrane réfléchissante (4).

7. Dispositif selon l'une des revendications 1 à 5, caractérisé en ce que les moyens de réglage agissent sur la face arrière (36) de la membrane réfléchissante (4) par l'intermédiaire d'un couteau annulaire (122).

8. Dispositif selon l'une des revendications 1 à 7, caractérisé en ce que la membrane réfléchissante (4), de par une configuration appropriée de sa face arrière (36), est plus épaisse au centre que sur son bord.

9. Dispositif selon la revendication 8, caractérisé en ce que la courbure de la face arrière de la membrane réfléchissante (4), entre son centre et son bord, présente au moins un point d'inflexion ou de changement de pente.

10. Dispositif selon l'une des revendications 1 à 9, caractérisé en ce que le bord de la membrane réfléchissante (4) est relié d'une seule pièce à un boîtier (45) de moyen de réglage.

11. Dispositif selon l'une des revendications 1 à 9, caractérisé en ce que le bord de la membrane réfléchissante (4) se prolonge en un tronçon périphérique (59) épaissi, pincé entre des parties de boîtier (54, 58) des moyens de réglage.

12. Dispositif selon l'une des revendications 1 à 11, caractérisé en ce que la position d'une tête de réglage (37) des moyens de réglage est détectable pour déterminer la position de la membrane réfléchissante (4).

13. Dispositif selon la revendication 12, caractérisé en ce que la position de la tête de réglage (37) est détectable par interférence d'un rayon lumineux réfléchi sur elle avec un autre rayon lumineux.

14. Dispositif selon l'une des revendications 1 à 13, caractérisé en ce que plusieurs miroirs déviateurs à une membrane réfléchissante (4) réglable sont prévus sur le trajet suivi par le rayon laser.

15. Dispositif selon la revendication 14, caractérisé en ce que les miroirs déviateurs sont disposés dans des plans différents.

16. Dispositif selon l'une des revendications 1 à 15, caractérisé en ce que l'optique de focalisation contient en plus un système de lentilles (10, 103) focalisant.

17. Dispositif selon l'une des revendications 1 à 16, caractérisé en ce que l'optique de focalisation est disposée sur un chariot (2, 105) déplaçable.

Fig.1

EP 0 710 551 B1

Fig. 3

Fig. 2

14

Fig. 4

Fig.5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18